# EUROPEAN PATENT APPLICATION

(11) **EP 4 822 195 A1**
(43) Date of publication of application: **14.10.2026**
(21) Application number: 25169978.1
(22) Date of filing: 11.04.2025
(51) Int. Cl.: F16B 19/05, F16B 35/04, F16B 5/06, F16B 25/10, F16B 31/02

(54) **JOINING ELEMENT, JOINING COMBINATION, JOINING METHOD AND JOINING TOOL**

(71) Applicant: Newfrey LLC, New Britain, CT 06053 (US)
(72) Inventor: Vorderbrüggen, Julian, 35394 Giessen (DE)
(74) Representative: Witte, Weller & Partner Patentanwälte mbB

(57) **Abstract**

A joining element (10) having a head (12) and a shaft (20) extending from the head (12), wherein an end of the shaft (20) is formed so as to define a shaft slide portion (26) and a shaft ring portion (28), wherein the shaft ring portion (28) is connected to the shaft slide portion (26) in such a manner that the connection (34) between the shaft ring portion (28) and the shaft slide portion (26) is broken and the shaft ring portion (28) is slid onto the shaft slide portion (26) when an axial breaking force (F) is applied to the shaft ring portion

## Description

The present disclosure relates to a joining element having a head and a shaft extending from the head. Further, the present disclosure relates to a combination of a self-piercing lockbolt and a collar, to a joining method, and to a joining tool.

In the field of joining workpieces, several technologies are known. A first technology is a classical screw bolt/nut joint, wherein a hole is pre-drilled into the workpieces, the screw is inserted, and a nut is screwed onto a threaded a shaft of the screw from an opposite axial side of the workpieces.

Also known are joining systems in which a retaining bolt is inserted into a pre-drilled hole of the workpiece arrangement, and a retaining ring is set onto the protruding end of the bolt by a setting tool which plastically deforms the retaining ring. Typically, material of the retaining ring flows into radial recesses of the bolt.

It is also known to use rivets which are inserted into a pre-drilled hole from one axial side, wherein a protruding end of the rivet on the other axial side is plastically deformed to form a so-called rivet connection.

In some cases, it is possible to dispense with the step of pre-drilling a hole into the workpieces. For example, in so-called punch rivet systems, a self-piercing rivet is punched through the workpiece arrangement, and a protruding end is plastically deformed by a die. In some cases, the punch rivets are head-less, wherein a punch and a die press the punch rivet axially so that material of the workpieces is pressed into radial recesses of the punch rivet. Such a punch rivet is for example known from document US 4,978,270 B.

A method for mechanically joining at least two workpieces by means of a punch rivet (also known as lockbolt) and a retaining ring is known from document DE 10 2010 000 500 B4.

Document DE 10 2010 000 500 B4 proposes to punch the rivet through the workpieces, so that it is not necessary to pre-drill a hole. As the punching process requires a certain axial punching force, the associated retaining ring must be configured such that it deforms only at a force which is higher than the punching force. This entails that the punch rivet tools must be configured for providing comparatively high forces. Particularly, in cases where the joints are to be made at locations with limited accessibility, this method is therefore limited.

On the other hand, the classic head-less punch rivets without retaining ring typically have only a comparatively low strength in the axial direction, particularly against head tensile loads. In addition, the strength against head tensile loads is strongly dependent on the material of the workpieces to be joined.

In some applications, it would be advantageous if the produced joined could be released, particularly without destroying the workpiece arrangement. Also, it might be advantageous if the removed joining element could be re-used.

If a joining element with a thread portion is to be used for establishing a joint, it is difficult to form the joining element as a self-piercing element. Namely, a slug which is punched out during the piercing step might stick to the joining element on account of material flow into a lower part of the thread. Another problem might occur on account of material of the workpiece arrangement or of a collar, as the material might stick to the radial circumference of the thread portion of the shaft.

Document EP 3 736 457 A1 relates to a joining element having a shaft, a head arranged at a first end of the shaft, and a punching element pressed onto the second end of the shaft, wherein the punching element must be removed before a nut is screwed onto a thread portion of the joining element.

In view of the above, it is an object of the present disclosure to provide an improved joining element, an improved joining combination, an improved joining method, and an improved joining tool.

The above object is achieved by a joining element having a head and a shaft extending from the head, wherein an end of the shaft is formed so as to define a shaft slide portion and a shaft ring portion, wherein the shaft ring portion is connected to the shaft slide portion in such a manner that the connection between the shaft ring portion and the shaft slide portion is broken and the shaft ring portion is slid onto the shaft slide portion when an axial breaking force is applied to the shaft ring portion.

The joining element, preferably, is suitable for performing a self-piercing joining process. When performing the self-piercing process, the connection between the shaft ring portion and the shaft slide portion is broken at the very beginning of the process, such that the shaft ring portion can be used to pierce the workpiece arrangement. The force necessary for breaking the connection between the shaft ring portion and the shaft slide portion is smaller than the force necessary for piercing through the workpiece arrangement.

The combination of the front faces of the shaft ring portion and of the shaft slide portion may preferably form a common punching surface for piercing a workpiece arrangement.

Further, the joining element ensures that any punching slug does not get stuck on the bolt and instead falls off cleanly. Further, it is ensured that the groove portion is not contaminated with material from the work piece arrangement.

Typically, the shaft ring portion remains on the shaft slide portion due to deformation of the shaft ring portion and/or of the shaft slide portion, after breaking the connection and after piercing through the workpiece arrangement. In some embodiments, however, it may be possible to remove the shaft ring portion from the shaft slide portion after having pierced through the workpiece arrangement.

Preferably, the joining element is made of a metal, preferably of steel.

In general, the shaft slide portion and that shaft ring portion may be formed separately and connected to each other by a connection process, e.g. by welding or gluing. It is particularly preferred, however, if the shaft ring portion and the shaft slide portion are unitarily connected to each other. In other words, it is preferred if the joining element includes the head and the shaft and the shaft ring portion and the shaft slide portion as one single unitary member. Thus, the joining element can be produced at low cost. In addition, the connection between the shaft ring portion and the shaft slide portion is preferably rigid enough so as to allow to store and transport multiple joining elements as bulk material.

Reliable joints can be produced with the above-described joining element.

The object is achieved in full.

Preferably, the joining element is a self-piercing joining element, wherein the shaft ring portion comprises a cutting edge for piercing a workpiece arrangement.

In this case, the shaft ring portion itself cuts through the workpiece arrangement, particularly at its outer circumference.

In addition, it is preferred if the shaft ring portion and the shaft slide portion form a common front face after the shaft ring portion has slid onto the shaft slide portion.

This allows to evenly distribute a punching force onto the workpiece arrangement, thereby ensuring reliable punching therethrough.

The axial length of the shaft ring portion may be designed to match the axial length of the shaft slide portion, contributing to a balanced load distribution.

Particularly, an axial length of the shaft ring portion is preferably approximately equal to an axial length of the shaft slide portion.

Further, it is preferred if the shaft comprises a groove portion arranged adjacent to the shaft slide portion.

The groove portion may be formed by at least one or by a plurality of radial grooves. In a preferred embodiment, the groove portion is formed by a thread portion.

Preferably, the groove portion is arranged directly adjacent to the shaft slide portion. Further, the thread portion, preferably, is arranged axially between the shaft slide portion and the head of the joining element.

The groove portion might be configured to take up material from the workpiece arrangement and/or from a collar to be swaged onto the groove portion.

In case that the groove portion is formed by a thread portion, it is preferably possible to remove the joining element from the workpiece arrangement after the joint has been produced by screwing the joining element out of the workpiece arrangement. In this removing step, the shaft ring portion might be stripped off from the shaft slide portion. In some cases, it might even be possible to re-use the joining element for re-establishing the joint, for example in case of repair work.

In another preferred embodiment, the shaft ring portion comprises a central recess.

The central recess, preferably, extends from a front face of the shaft ring portion into the direction of the head of the joining element. The central recess allows to define an annular connection between the shaft slide portion and the shaft ring portion, which is figured as a predetermined breaking connection.

In addition, it is preferred if the central recess of the shaft ring portion has an inner diameter which is equal to or larger than an outer diameter of the shaft slide portion.

In this case, the shaft ring portion might easily slide onto the shaft slide portion as soon as the connection between these portions is broken.

In a preferred embodiment, an outer diameter of the shaft ring portion is equal to or larger than an outer diameter of the groove portion.

This assists in preventing that material from the workpiece arrangement or a collar flows into the thread during the joining process, particularly on account of a piercing step.

Further, it is preferred if an outer diameter of the groove portion is larger than an outer diameter of the shaft slide portion.

This ensures that the groove portion can be used as a stop for slide movements of the shaft ring portions on the shaft slide portion. In other words, the shaft ring portion is pressed against an underside of the groove portion during the joining process.

In addition, it is preferred if the shaft comprises a smooth portion which is axially located between the head and the groove portion.

The smooth portion, preferably, is arranged within the workpiece arrangement after the joint has been produced.

Preferably, an outer diameter of the groove portion is larger than an outer diameter of the smooth portion.

This ensures that the shaft of the joining element can easily be inserted into the workpiece arrangement after the workpiece arrangement has been punched through.

In a preferred embodiment, the joining element is a solid self-piercing rivet which can be set in a workpiece arrangement.

In this case, it is preferred if the head of the self-piercing rivet has a larger outer diameter than the shaft thereof. Further, it is preferred if the self piercing rivet is at least partially or fully arranged within the workpiece arrangement after the joining process. An upper end of the head and a lower end of the shaft might be arranged flush with surfaces of the workpiece arrangement.

In another preferred embodiment, the joining element is a self-piercing lockbolt which has a thread portion onto which a nut can be screwed for performing a joining operation.

In this case, an end of the shaft, which includes the thread portion, protrudes from the lowermost workpiece of the workpiece arrangement after having been punched through. Also, it might be preferable if the shaft ring portion is removed before the nut is screwed onto the thread portion.

In a particularly preferred embodiment, the joining element is a self-piercing lockbolt which is configured to be used in combination with an annular shush collar (also known as closure ring) to be swaged on at least a groove portion of the self-piercing lockbolt.

In this case, the joining process can be simplified, and it is not necessary to use a separate screwing tool for screwing a nut onto the thread portion.

Preferably, the step of breaking the connection between the shaft slide portion and the shaft ring portion, the step of punching the joining element through the workpiece arrangement, and the step of swaging the collar on a protruding portion of the joining element, which includes the groove portion, are made in one single joining process and in one single joining tool.

Further, the above object is achieved by a combination of the self-piercing lockbolt as defined above, and a collar which is configured to be swaged on at least a groove portion of the self-piercing lockbolt for performing a joining operation.

In addition, the above object is achieved by a method for performing a joining operation on a workpiece arrangement, comprising the steps of providing a workpiece arrangement and a joining element as defined above, placing the joining element on the workpiece arrangement and exerting an axial pressure on the joining element which exceeds a predetermined breaking pressure of the connection between the shaft ring portion and the shaft slide portion so that the connection breaks and the shaft ring portion slides onto the shaft slide portion, and increasing the axial pressure on the joining element to a piercing pressure so that the joining element pierces and penetrates the workpiece arrangement.

The joining method allows to join at least two workpieces together in one step without having to align them before performing the joining process.

If the joint is to be separated again, the collar may preferably be unscrewed from the shaft and pushes the shaft ring portion off the shaft slide portion, allowing the joint to be completely separated.

For separating the joint, the joining element and/or the collar have a tool engagement feature which allows a tool to apply a torque to separate the parts from each other. The tool engagement feature might be an external feature of the joining element head, e.g. at an outer circumference thereof. The tool engagement feature might also be an internal feature, e.g. an axial recess in the head of the joining element. In addition, a corresponding tool engagement feature might be provided on an outer circumference of the collar.

Finally, the above object is achieved by a joining tool having a die and a punch and being configured to conduct the above-defined joining method.

It will be understood that the afore-mentioned features and to be described hereinafter cannot only be used in the respectively given combination, but also in different combinations or independently, without leaving the scope of the present invention.

It will be understood that the afore-mentioned features and to be described hereinafter cannot only be used in the respectively given combination, but also in different combinations or independently, without leaving the scope of the present disclosure shush.

Further features and advantages of the invention can be taken from the subsequent description of preferred embodiments with reference to the drawings. In the drawings:
- Fig. 1: is a side view of an embodiment of a joining element;
- Fig. 2: is a longitudinal sectional view of the joining element of Fig. 1;
- Figs. 3a to 3e: are steps of a joining method for joining two workpieces together by means of the joining element of Figs. 1 and 2;
- Fig. 4: is a diagram of punch force vs. machine stroke during a joining process as described with respect to Figs. 3a to 3e;
- Fig. 5: is a sectional view of a joint produced by the joining method;
- Figs. 6a to 6d: are perspective views of alternative embodiments of joining elements having alternative tool engagement features;
- Figs. 7a and 7b: are perspective views of alternative embodiments of collars to be used in combination with any of the joining elements of Figs. 1 to 6;
- Figs. 8a and 8b: are a side view of another embodiment of a joining element and of a joint produced by the joining element, respectively; and
- Figs. 9a and 9b: are a side view of another embodiment of a joining element and of a joint produced by the joining element, respectively.

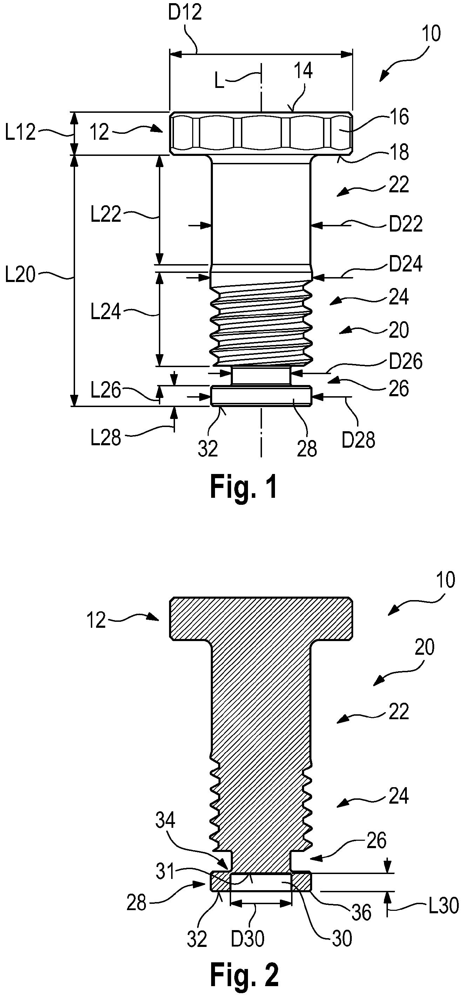

Fig. 1 shows a joining element 10 which has a head 12. The head 12 has an upper punching surface 14 and an outer circumference defining a tool engagement feature 16. Further, the head 12 has a head underside 18.

The joining element 10, further, has a shaft 20. The shaft 20 extends from the head underside 18 of the head 12.

The shaft extends along a longitudinal axis L and preferably has a small outer diameter than the head 12.

The shaft 20 comprises a smooth portion 22 adjacent to the head 12, the smooth portion 22 having a smooth outer surface.

Further, the shaft 20 comprises a groove portion 24 which is formed as a thread portion 24. The thread portion 24 is located adjacent to the smooth portion 22.

At an end of the shaft 20, which is opposite to the head 12, the shaft 20 comprises a shaft slide portion 26 adjacent to the thread portion 24, and a shaft ring portion 28.

As can be seen in Fig. 2, the shaft ring portion 28 includes a central recess 30 which has preferably a circular shape and extends from a front face 32 of the shaft ring portion 28 into the direction of the head 12, so that the front face 32 is annular.

The recess 30 forms a circular recess bottom 31 which is located such that an annular connection 34 is created between the shaft slide portion 26 and the shaft ring portion 28.

The recess bottom 31 forms a circular front face of the shaft slide portion 26.

The annular connection 34 between the shaft slide portion 26 and the shaft ring portion 28 is formed as a predetermined breaking section.

The annular front face 32 of the shaft ring portion 28 defines an outer annular cutting edge 36 which is used for piercing into a workpiece arrangement, as will be described later.

The head 12 has an outer diameter D12. The smooth portion 22 has an outer diameter D22. The thread portion 24 has an outer diameter D24 which is defined by the major diameter of the thread portion 24.

The shaft slide portion 26 has a smooth outer surface and defines an outer diameter D26. The shaft ring portion 28 has an outer diameter D28. The recess 30 has an inner diameter D30.

Further, the head 12 has an axial length L12. The shaft 20 has an axial length L20. The smooth portion 22 has an axial length L22. The thread portion 24 has an axial length L24. The shaft slide portion 26 has an axial length L26. The shaft ring portion 28 has an axial length L28. The recess 30 has an axial length/depth L30.

The joining element 10 is made based on at least one of, preferably each of the following conditions:
D12 > D22; D24 > D22; D26 < D22; D28 ≥ D24 (preferably D28 > D24); D30 ≥ D26; L30 < L28; and/or L28 ≈ L26

The joining element 10, preferably, has the following actual dimensions:

| | Range | Preferred actual dimension |
|---|---|---|
| D12 | 6.0 mm to 14.0 mm | 9.2 mm |
| D22 | 3.8 mm to 6.8 mm | 4.8 mm |
| D24 | 4.0 mm to 7.0 mm | 5.0 mm |
| D26 | 1.9 mm to 6.0 mm | 2.95 mm |
| D28 | 4.0 mm to 7.2 mm | 5.05 mm |
| D30 | 2.0 mm to 6.0 mm | 3.0 mm |
| L12 | 0.5 mm to 7.0 mm | 4.0 mm |
| L20 | 6.0 mm to 27.0 mm | 14.8 mm |
| L22 | 2.0 mm to 11.0 mm | 7.9 mm |
| L24 | 2.5 mm to 10.0 mm | 4.8 mm |
| L26 | 0.7 mm to 3.0 mm | 1.00 mm |
| L28 | 0.7 mm to 3.0 mm | 1.05 mm |
| L30 | 0.5 mm to 2.9 mm | 1.00 mm |

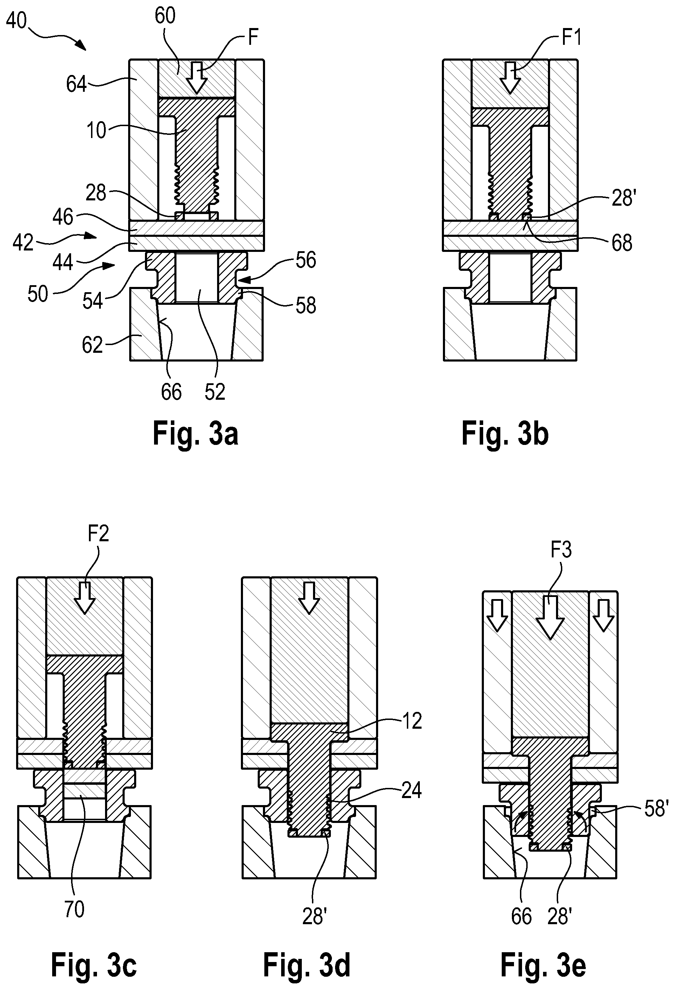

Fig. 3a to Fig. 3e show steps of a joining method using the joining element 10 of Figs. 1 and 2.

The joining process is performed using a joining tool 40.

The joining process is performed on a workpiece arrangement 42. In the present case, the workpiece arrangement 42 comprises a lower workpiece 44, made of a sheet material, and an upper workpiece 46 made of a sheet material. The material of the workpieces, preferably, is metal. However, at least one of the workpieces can be made of a composite material. In some applications, the workpieces are made of aluminum. That workpiece arrangement 42 may include more than two workpieces.

The joining element 10 which has the thread portion 24 might be used in combination with a nut in order to join the two workpieces 44, 46. However, in the present embodiment, the joining element 10 is used in combination with an annular collar 50 to be swaged on at least a part of the thread portion 24 of the joining element 10.

The collar 50 comprises a central opening 52 having a diameter equal to or larger than the outer diameter L28 of the shaft ring portion 28.

Further, the collar 50 comprises a flange portion 54 which is configured to contact a lower face of the lower workpiece 44.

Further, the collar 50 comprises a collar slide portion 56 and a collar ring portion 58.

The collar slide portion 56 is arranged axially between the flange portion 54 and the collar ring portion 58.

The joining tool 40 comprises a punch 60 and a die 62. The die 62 is configured to receive the collar 50. Particularly, the die 62 is configured to be stationary and to support the collar 50 axially at its collar ring portion 58. Further, the die 62 has a conical inner die surface 66, the function of which will be described below.

The joining tool 40, further, comprises a workpiece holder 64 which has an annular shape and is configured to be placed on the upper face of the upper workpiece 46, to clamp the workpiece arrangement 42 between the collar 50 and the workpiece holder 64.

In addition, the joining tool 40 comprises the punch 60 which is configured to be moved axially with respect to the die 62 and is adapted to apply a joining force F onto the punching surface 14 of the head 12 of the joining element 10.

Fig. 3a shows an initial phase of a joining process. Here, the workpiece arrangement 42 is placed on top of the collar 50, and the workpiece arrangement 42 is clamped between the flange portion 54 of the collar 50 and the workpiece holder 64.

Further, the joining element 10 is placed on top of the upper workpiece 46, such that its shaft is aligned coaxially with the collar 50. In this situation, the annular front face 32 of the shaft ring portion 28 contacts the upper surface of the upper workpiece 46.

In a next step, an axial pressure is exerted by the force F onto the joining element, which exceeds a predetermined breaking pressure F1 of the connection 34. The breaking pressure F1 makes the connection 34 between the shaft ring portion 28 and the shaft slide portion 26 break, so that the shaft ring portion 28 slides onto the shaft slide portion 26.

This situation is shown in Fig. 3b, where the recess bottom 31, which forms a front face of the shaft slide portion 26, and the annular front face 32 of the shaft ring portion 28 together form a common front face 68.

In a next step, as shown in Fig. 3c, the axial pressure exerted by the punch 60 is increased to a piercing pressure F2 which is sufficient to pierce the workpiece arrangement 32, using the annular cutting edge 36 of the shaft ring portion 28. The common front face 68 pushes a slug 70 of the workpiece arrangement 42 through the collar 50, as is shown in Fig. 3c.

As is shown in Fig. 3d, the punch presses the joining element further through the workpiece arrangement, until the head underside 18 of the head 12 comes into contact with the upper surface of the upper workpiece 46, as is shown in Fig. 3d.

In this situation, the thread portion 24 is preferably almost completely arranged within the central opening 52 of the collar 50. The shaft slide portion 26 with the shaft ring portion 28 slid thereon, preferably protrudes from the lower surface of the collar 50, as is shown in Fig. 3d. Because the shaft ring portion 28 has an outer diameter D28 which is preferably larger than the outer diameter of the thread portion 24, the slug 70 will not adhere to the common front face 68, and the thread portion 24 is not contaminated with material from the workpiece arrangement 42 or the collar 50.

In a next step, the collar 50 is deformed to be swaged onto the shaft of the joining element 10 in a manner so that material of the collar 50 flows radially into the grooves of the thread portion 24, as is schematically shown by arrows in Fig. 3e.

This swaging process is made in two phases. In a first phase, the axial pressure of the die 62 or of the workpiece holder 64 is increased to a shearing pressure F3. Because of this shearing pressure F3, which is larger than the piercing pressure F2, the collar ring portion 58 is sheared off from the annular basis of the collar 50 and is slid onto the collar slide portion 56, against an underside of the flange portion 54. Further, in a second phase, on account of the conical (tapered) die surface 66, the lower portion of the collar 50 is deformed so as to be radially compressed, thereby creating the radial material flow of collar material into the thread portion 24.

The fact that the steps of Figs. 3a to 3d can be conducted without exerting a radial pressure on the collar (because the collar ring portion 58 is not yet sheared off), allows to perform the steps of Figs. 3a to 3d without a negative influence by the collar 50. Only as soon as the collar ring portion 58 is sheared off, which is done only when the joining element 10 has reached its final position with respect to the workpiece arrangement 42 and the collar 50, the collar ring portion 58 is sheared off so that the collar 50 comes into contact with the conical die surface 66 and is deformed radially.

In Fig. 3b, the shaft ring portion is designated as 28', i.e. in a condition where it is already slid onto the shaft slide portion 26. Similarly, in Fig. 3e, the collar ring portion is designated as 58', to show that the collar ring portion 58 has been sheared off and moved onto the collar slide portion 56.

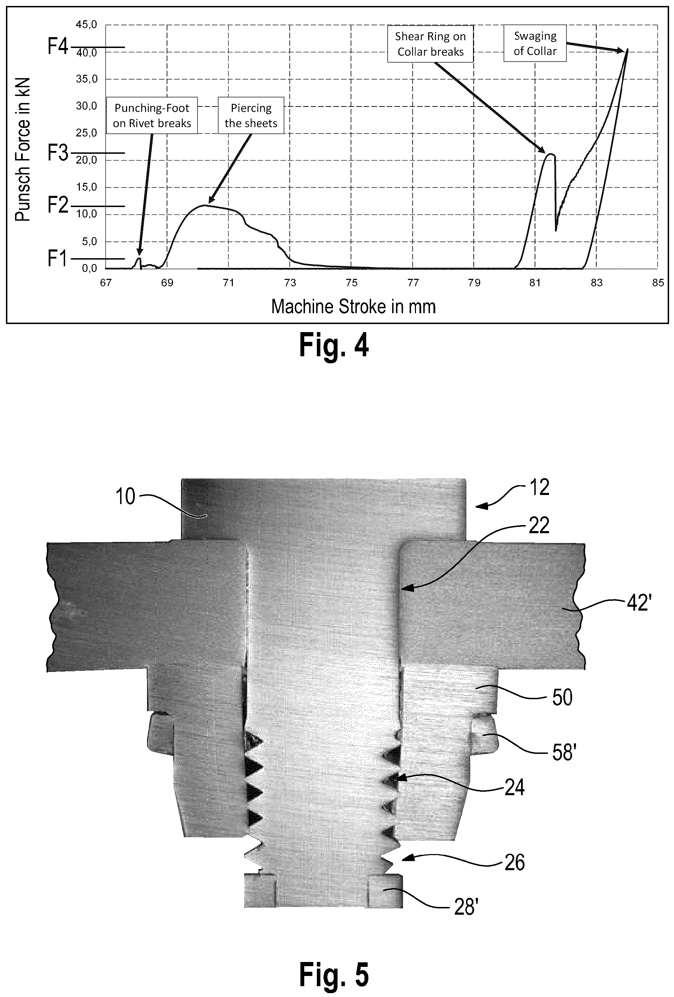

Fig. 4 shows the joining process by means of a diagram of punch force vs. machine stroke.

As can be seen at the start of the joining process, approximately at a machine stroke of 68 mm, the punch 60 exerts a predetermined breaking pressure F1 so that the annular connection 34 breaks and the shaft ring portion 28 slides onto the shaft slide portion 26.

Thereafter, using the common front face 68, the workpiece arrangement 42 is pierced through, wherein a piercing pressure F2 is applied onto the joining element 10. The maximum piercing pressure is exerted at about 70 mm stroke.

Thereafter, the joining element is pushed through the pierced workpiece arrangement 42 up until the head 12 comes into contact with the workpiece arrangement, at about 80 mm stroke. Here, the pressure onto the joining element and the pressure by the workpiece holder 64 are increased to a shearing pressure F3, so that the collar ring portion 58 is sheared off onto the collar slide portion 56. This happens at about 82 mm. Thereafter, the pressure is further increased to a swaging pressure F4 by means of which the collar 50 is deformed to create material flow into the thread portion 24.

F4 is larger than F3, and F3 is larger than F2, and F2 is larger than F1.

At about 84 mm, the joining process is completed.

Fig. 5 shows a polished section of a finalized joint as described above, wherein a one-part workpiece arrangement 42' has been used. The shaft ring portion 28' is shown being slid onto the shaft slide portion 26, and the collar ring portion 58' is shown as being sheared off. The lower outer portion of the collar 50 is conical, deformed by the conical inner portion of the die 62, and material of the collar 50 has entered the threads of the thread portion 24.

The joint created with the joining element 10 enables a reliable fastening of workpieces without requiring pre-drilled holes while ensuring a strong and secure joint. The breakable connection 34 allows a controlled axial displacement during the setting process. The joining process can be collected in one joining tool 40 using single continuous relative movement of punch 60 and die 62.

Further, the joining element 10 can be unscrewed from the joint connection, in which case the shaft ring portion 28' will be pushed off the shaft slide portion 26, because the upper surface of the shaft ring portion 28' comes into contact with the lower portion of the collar 50.

Therefore, when having unscrewed the joining element 10 from the workpiece arrangement, it might even be possible to re-screw the joining element 10 again into the workpiece arrangement to re-establish the joint.

To unscrew the joining element 10 from the finalized joint, a tool like a wrench might be used, which engages either a tool engagement feature 16 of the head 12 and/or, a corresponding tool engagement feature of the collar 50 by a wrench or the like.

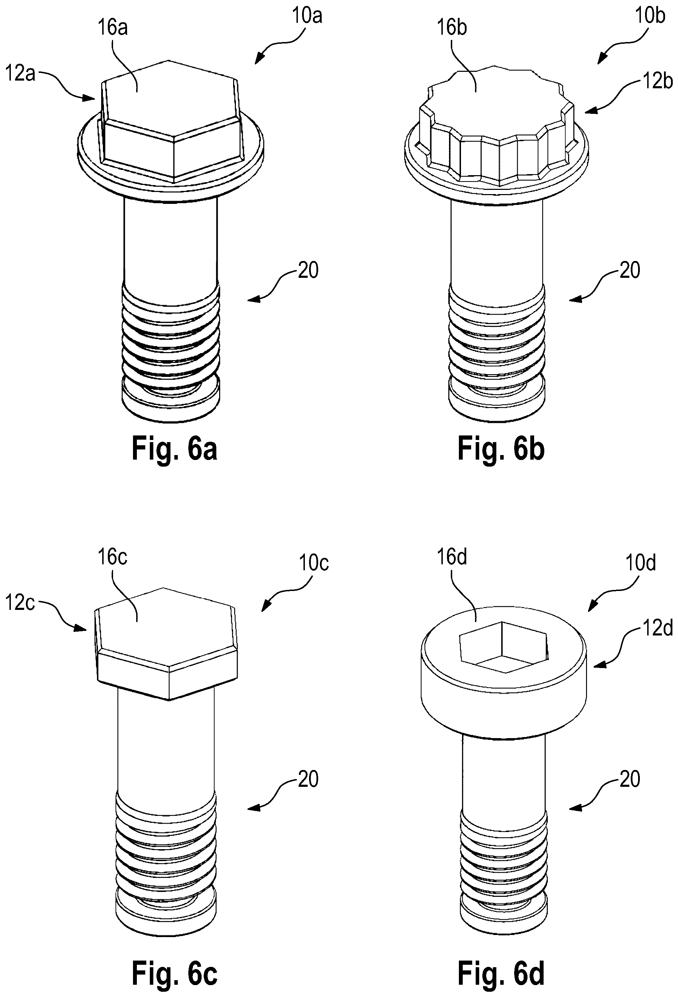

Figs. 6a to 6d show different embodiments of joining elements with different tool engagement features.

Fig. 6a shows a joining element 10a which has a head 12a. The head 12a forms a flange a on top of the flange a hexagonal tool engagement feature 16a.

Fig. 6b shows a joining element 10b, having a head 12b with a multi-facet tool engagement feature 16b.

Fig. 6c shows a joining element 10c with a hexagonal head 12c which itself forms the tool engagement feature 16c.

Fig. 6d shows a joining element 10d with a head 12d which has an axial recess forming an internal hexagonal tool engagement feature 16d.

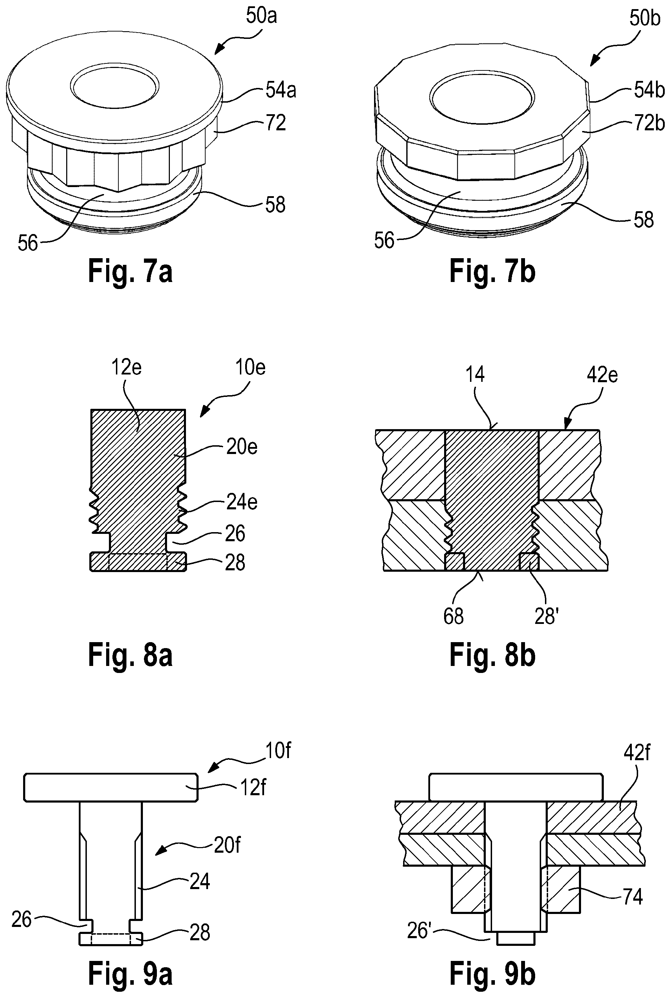

Figs. 7a and 7b show alternative embodiments of collars.

Fig. 7a shows a collar 50a having a flange portion 54a, wherein a lower part of the flange portion 54a is formed by a multi-facet tool engagement feature 72.

Fig. 7b shows a collar 50b which has a flange portion 54b which has a polygonal tool engagement feature 72b which extends along the entire length of the flange portion 54b.

Fig. 8a shows an alternative embodiment of a joining element 10e which is a solid self-piercing rivet.

The solid self-piercing rivet 10e comprises a head 12e having the same diameter as a shaft 20e. A groove portion 24e is formed at the shaft 20e. Further, the joining element 10e comprises a shaft slide portion 26 adjacent to the groove portion 20e, and a shaft ring portion 28.

When setting the self-piercing rivet 10e, the shaft ring portion 28 is slid onto the shaft slide portion 26, as is shown in Fig. 8b at 28'. Thereby, a common front face 68 is created which is used for the piercing step.

Figs. 9a and 9b show another embodiment of a joining element 10f which is essentially formed identical as any of the joining elements 10 to 10d of Figs. 1 to 6, comprising a shaft 20f which has a thread portion 24.

As can be seen in Fig. 9b, this allows to screw a nut 74 onto the thread portion 24, to join workpieces of the workpiece arrangement 42f.

### Reference Numerals:

- 10: joining element (self piercing lockbolt)
- 12: head
- 14: punching surface
- 16: tool engagement feature
- 18: head underside
- 20: shaft
- 22: smooth portion
- 24: groove portion (thread portion)
- 26: shaft slide portion
- 28: shaft ring portion
- 30: recess
- 31: recess bottom
- 32: annular front face 28
- 34: annular connection (= predetermined breaking section)
- 36: annular cutting edge
- 40: joining tool
- 42: workpiece arrangement
- 44: lower workpiece
- 46: upper workpiece
- 50: collar
- 52: central opening
- 54: flange portion
- 56: collar slide portion
- 58: collar ring portion

- 60: punch
- 62: die 40
- 64: workpiece holder

- 68: common front face 31/32
- 70: slug 42
- 72: tool engagement feature
- 74: nut

- L: longitudinal axis
- D12: outer diameter 12
- D22: outer diameter 22
- D24: outer diameter 24
- D26: outer diameter 26
- D28: outer diameter 28
- D30: inner diameter 30
- L12: axial length 12
- L20: axial length 20
- L22: axial length 22
- L24: axial length 24
- L26: axial length 26
- L28: axial length 28
- L30: axial length 30
- F: axial pressure 60
- F1: predetermined braking pressure 34
- F2: piercing pressure
- F3: shearing pressure
- F4: swaging pressure

## Claims

1. A joining element (10) having a head (12) and a shaft (20) extending from the head (12), wherein an end of the shaft (20) is formed so as to define a shaft slide portion (26) and a shaft ring portion (28), wherein the shaft ring portion (28) is connected to the shaft slide portion (26) in such a manner that the connection (34) between the shaft ring portion (28) and the shaft slide portion (26) is broken and the shaft ring portion (28) is slid onto the shaft slide portion (26) when an axial breaking force (F) is applied to the shaft ring portion (28).

2. The joining element of claim 1, wherein the joining element is a self-piercing joining element and wherein the shaft ring portion (28) comprises a cutting edge (36) for piercing a workpiece arrangement (42).

3. The joining element of claim 1 or 2, wherein the shaft ring portion (26) and the shaft slide portion (28) form a common front face (68) after the shaft ring portion (28') has slid onto the shaft slide portion (26).

4. The joining element of claim 3, wherein an axial length (L28) of the shaft ring portion (28) is approximately equal to an axial length (L26) of the shaft slide portion (26).

5. The joining element of any one of claims 1 to 4, wherein the shaft (20) comprises a groove portion (24) arranged adjacent to the shaft slide portion (26).

6. The joining element of any one of claims 1 to 5, wherein the shaft ring portion (28) comprises a central recess (30).

7. The joining element of claim 6, wherein the central recess (30) of the shaft ring portion (28) has an inner diameter (D30) which is equal to or larger than an outer diameter (D26) of the shaft slide portion (26).

8. The joining element of any one of claims 1 to 7, wherein
- an outer diameter (D28) of the shaft ring portion (28) is equal to or larger than an outer diameter (D24) of the groove portion (24); and/or wherein
- an outer diameter (D24) of the groove portion (24) is larger than an outer diameter (D26) of the shaft slide portion (26); and/or wherein
- the shaft comprises a smooth portion (22) which is axially located between the head (12) and the groove portion (24), wherein, preferably, an outer diameter (D24) of the groove portion (24) is larger than an outer diameter (D22) of the smooth portion (22).

9. The joining element of any one of claims 1 to 8, wherein the joining element is a solid self-piercing rivet (10e) which can be set in a workpiece arrangement (42e).

10. The joining element of any one of claims 1 to 8, wherein the joining element is a self-piercing lockbolt (10f) which has a thread portion (24) on which a nut (72) can be screwed for performing a joining operation.

11. The joining element of any one of claims 1 to 8, wherein the joining element is a self-piercing lockbolt (10a-10d) which is configured to be used in combination with a collar (50) to be swaged on at least a groove portion (24) of the self-piercing lockbolt (10a-10d).

12. A combination of the self-piercing lockbolt (10a-10d) of claim 11 and a collar (50) which is configured to be swaged on at least a groove portion (24) of the self-piercing lockbolt (10a-10d) for performing a joining operation.

13. A method for performing a joining operation on a workpiece arrangement (42), comprising the steps:
providing a workpiece arrangement and a joining element (10) of any one of claims 1 to 12,
placing the joining element (10) on the workpiece arrangement (42) and exerting an axial pressure on the joining element (10) which exceeds a predetermined breaking pressure (F1) of the connection (34) between the shaft ring portion (28) and the shaft slide portion (26) so that the connection (34) breaks and the shaft ring portion (28) slides onto the shaft slide portion (26); and
increasing the axial pressure on the joining element (10) to a piercing pressure (F2) so that the joining element pierces and penetrates the workpiece arrangement (42).

14. A joining tool having a die (62) and a punch (60) and being configured to conduct the joining method of claim 13.
